# EUROPÄISCHE PATENTSCHRIFT

(11) **EP 3 990 306 B1**
(45) Veröffentlichungstag und Bekanntmachung des Hinweises auf die Patenterteilung: **23.08.2023**
(21) Anmeldenummer: 20746889.3
(22) Anmeldetag: 10.07.2020
(51) Int. Cl.: B60L 5/19, B60L 5/20

(54) **STROMABNEHMER FÜR EIN SCHIENENFAHRZEUG**
CURRENT COLLECTOR FOR A RAIL VEHICLE
PRISE DE COURANT POUR UN VÉHICULE FERROVIAIRE

(30) Priorität: 27.08.2019 DE 102019212826
(43) Veröffentlichungstag der Anmeldung: 04.05.2022
(73) Patentinhaber: Siemens Mobility GmbH, 81739 München (DE)
(72) Erfinder: PLABST, Roland, 82239 Alling (DE); WENDLER, Dieter, 63741 Aschaffenburg (DE)
(74) Vertreter: Siemens Patent Attorneys
(86) Internationale Anmeldenummer: PCT/EP2020/069597
(87) Internationale Veröffentlichungsnummer: WO 2021/037431

(56) Entgegenhaltungen:
- EP-A2- 2 455 251
- EP-A2- 2 497 674
- DE-A1-102011 050 563
- DE-A1-102012 108 492

## Beschreibung

Die Erfindung betrifft einen Stromabnehmer für ein Schienenfahrzeug, das bevorzugt im grenzüberschreitenden Verkehr eingesetzt wird.

Innerhalb des Internationalen Eisenbahnverbands ("Union Internationale des Chemins de Fer, UIC") werden verschiedene Stromabnehmer-Wippenprofile verwendet, die beispielswiese über die Norm EN 50367 definiert sind. Derzeit sind die folgenden Wippenbreiten genormt bzw. definiert: 1450 mm, 1600 mm, 1800 mm, 1760 mm und 1950 mm.

Zusätzlich werden verschiedene Schleifleisten hinsichtlich Breite und Material in Abhängigkeit von verwendeten Stromstärken definiert, zum Beispiel:
- Bei einem AC-Betrieb mit einer Stromstärke bis 600 A wird eine Schleifleiste mit Kohlenstoff mit einer Breite von 35 mm bis 42 mm verwendet.
- Bei einem DC-Betrieb mit einer Stromstärke bis 4000 A wird eine Schleifleiste mit einem metallimprägnierten Kohlenstoff mit einer Breite von 42 mm bis 60 mm verwendet.

Dadurch existieren im Internationalen Eisenbahnverband UIC eine Vielzahl von unterschiedlichen Stromabnehmern, die im grenzüberschreitenden Verkehr an einem Schienenfahrzeug zu berücksichtigen sind.

Aus Platzgründen kann auf dem Dach eines derartigen Schienenfahrzeugs nur eine begrenzte Anzahl von Stromabnehmen verbaut werden. Auf einem üblichen Schienenfahrzeug sind maximal vier Einbauplätze für Stromabnehmer verfügbar, so dass eine Anzahl von befahrbaren Ländern für ein grenzüberschreitendes Schienenfahrzeug über die Anzahl der auf dem Dach montierbaren Stromabnehmer begrenzt ist.

Mit Blick auf die geschilderte Situation wäre ein universeller Stromabnehmer wünschenswert, der bei einem grenzüberschreitenden Verkehr in mehreren Stromnetzen einsetzbar ist.

Aus den beiden Druckschriften EP 2 497 674 A2 bzw. DE 10 2011 013 267 A1 ist ein derartiger Stromabnehmer bekannt. Dessen Stromabnehmerwippe besitzt geteilte Schleifleisten und einen integrierten Verstell-/Verriegelungsmechanismus. Die Schleifleistenenden und Auflaufhörner werden in Fahrzeugquerrichtung verschoben. Eine erste Anwendung dieser Lösung ist ein AC-Stromabnehmer mit einer variablen Wippenbreite zwischen 1450 mm und 1950 mm. Damit ersetzt ein derartiger Stromabnehmer zwei traditionelle Stromabnehmer mit einer jeweiligen festen (Wippen-) Breite.

Aus der Druckschrift DE 10 2012 108 492 A1 ist ein Stromabnehmer bekannt, bei dem eine Stromabnehmerwippe quer zur Fahrtrichtung verlagerbare Bügel aufweist. Die Bügel sind über Schwenkeinrichtungen an der Stromabnehmerwippe in vertikaler Richtung schwenkbar gelagert.

Aus der Druckschrift EP 2 455 251 A2 ist eine Stromabnehmerwippe bekannt, die zwei parallel angeordnete Schleifleisten und zwei Endhörner aufweist. An den äußeren Enden der Endhörner sind Auflaufhörner angeordnet, die mittels einer Stelleinrichtung gegeneinander und parallel zu den Schleifleisten verschiebbar angebracht sind. Die Endhörner sind über Hebel an der Wippe gelenkig befestigt.

Es ist die Aufgabe der vorliegenden Erfindung, einen verbesserten Stromabnehmer für ein Schienenfahrzeug im grenzüberschreitenden Verkehr bereitzustellen, mit dem die oben genannten, länderspezifischen Begrenzungen überwunden werden.

Diese Aufgabe wird durch die Merkmale des Anspruchs 1 gelöst. Vorteilhafte Weiterbildungen sind in den jeweiligen abhängigen Ansprüchen angegeben.

Die Erfindung betrifft einen Stromabnehmer für ein Schienenfahrzeug, das für einen grenzüberschreitenden Verkehr vorgesehen ist. Der Stromabnehmer weist einen auch als "Stromabnehmerwippe" bezeichneten Träger auf.

Auf dem Träger sind zwei Schleifleisten befestigt, die beide eine erste Länge aufweisen.

Unter dem Begriff Schleifleiste wird hier eine Baugruppe verstanden, die ein Trageprofil bzw. eine tragende Aufnahmevorrichtung sowie eine mit ihr verbundene leitende Schicht umfasst. Die leitende Schicht ist bevorzugt als Graphitschicht ausgebildet. Über die leitende Schicht bzw. über die Graphitschicht wird von einer Oberleitung bzw. von einem Fahrdraht elektrische Leistung entnommen und dem Schienenfahrzeug zugeführt.

Der Träger ist derart ausgebildet, dass er auf dem Dach des Schienenfahrzeugs die beiden Schleifleisten quer zur Fahrtrichtung des Schienenfahrzeugs ausrichtet und diese in elektrisch leitenden Kontakt zum Fahrdraht bringt.

Erfindungsgemäß weist jede Schleifleiste an jedem Ende jeweils eine Schleifleisten-Verlängerung auf. Die jeweilige Schleifleisten-Verlängerung ist drehbar gelagert mit dem jeweiligen Ende der Schleifleiste verbunden. In einer ersten Position sind die Schleifleisten-Verlängerungen derart zur jeweiligen Schleifleiste angeordnet, dass eine resultierende Gesamtlänge der Schleifleiste mit den zugehörigen Schleifleisten-Verlängerungen der ersten Länge der Schleifleiste entspricht.

Mit anderen Worten sind hier die Schleifleisten-Verlängerungen über eine Drehbewegung eingeklappt, so dass sie in der ersten Position die zugehörige Schleifleiste nicht verlängern.

In einer zweiten Position sind die Schleifleisten-Verlängerungen derart zur jeweiligen Schleifleiste angeordnet, dass die resultierende Gesamtlänge der Schleifleiste mit den zugehörigen Schleifleisten-Verlängerungen einer zweiten Länge entspricht, die größer ist als die erste Länge.

Mit anderen Worten sind hier die Schleifleisten-Verlängerungen über die Drehbewegung ausgeklappt, so dass sie in der zweiten Position die zugehörige Schleifleiste verlängern.

In einer vorteilhaften Weiterbildung weist jede Schleifleisten-Verlängerung an einem Ende ein Auflaufhorn oder eine entsprechend gestaltete Restkontur auf, so dass in der zweiten Position der Schleifleisten-Verlängerungen die Funktionalität eines Auflaufhorns für die verlängerte Schleifleiste sichergestellt ist.

In einer vorteilhaften Weiterbildung sind die Schleifleisten-Verlängerungen über Hydraulik-Zylinder oder über Druckluft-Zylinder drehbar, wobei jeder Zylinder an einer ersten Seite mit dem Träger und an einer zweiten Seite mit einer zugeordneten Schleifleisten-Verlängerung verbunden ist.

In einer vorteilhaften Weiterbildung sind die beiden Schleifleisten in einem vorbestimmten Abstand im Wesentlichen parallel zueinander auf dem Träger befestigt.

In einer vorteilhaften Weiterbildung ist der Träger derart ausgebildet, dass er auf dem Dach des Schienenfahrzeugs die beiden Schleifleisten quer zur Fahrtrichtung des Schienenfahrzeugs ausrichtet und diese in elektrisch leitendem Kontakt zum Fahrdraht bringt, der längs der Fahrtrichtung des Schienenfahrzeugs angeordnet ist, um eine Stromaufnahme vom Fahrdraht zu den Schleifleisten zu realisieren.

In einer vorteilhaften Weiterbildung sind die Schleifleisten sowie die zugehörigen Schleifleisten-Verlängerungen in der ersten Position und in der zweiten Position derart angeordnet, dass die zugehörigen leitenden Schichten bzw. Graphitschichten in einer gemeinsamen Ebene angeordnet sind, um die Leistungsabnahme vom Fahrdraht störungsfrei zu gewährleisten.

In einer vorteilhaften Weiterbildung sind die beiden Schleifleisten der ersten Länge an ihren jeweiligen Enden miteinander verbunden, so dass über die jeweilige Verbindung die Funktionalität eines Auflaufhorns für die unverlängerten Schleifleisten realisiert wird.

Bei der vorliegenden Erfindung wird beispielhaft eine 1450 mm breite Stromabnehmerwippe bzw. Stromabnehmer durch die drehbaren Schleifleisten-Verlängerungen auf 1950 mm verlängert und damit der resultierende Stromabnehmer verbreitert.

Die Schleifleisten-Verlängerungen sind jeweils am Ende der beiden Schleifleisten angeordnet und werden durch eine rotatorische Bewegung nach außen gedreht bzw. nach außen geklappt, so dass sich eine verfügbare Schleifleisten-Nutzlänge vergrößert.

In einer vorteilhaften Weiterbildung liegt der jeweilige Drehpunkt als Angriffspunkt für den Zylinder im mittleren Bereich der Schleifleisten und wird darüber hinaus so gewählt, dass bei der Drehbewegung der Schleifleisten-Verlängerungen ein stetiger Übergang des Fahrdrahts von den Schleifleisten zu den Schleifleisten-Verlängerungen gewährleistet wird.

In einer vorteilhaften Weiterbildung ist an jeder Schleifleisten-Verlängerung zusätzlich ein Auflaufhorn oder eine entsprechend gestaltete Restkontur angebracht. Diese Auflaufhörner bleiben im eingedrehten Zustand der Verlängerungen unterhalb der Kontur des mittleren Bereichs der nichtverlängerten Schleifleisten und haben keine Möglichkeit zur Berührung mit dem Fahrdraht.

Die Auflaufhörner der Schleifleisten-Verlängerungen schwenken zusammen mit diesen nach außen und ergeben zum Beispiel in der ausgedrehten Endlage in der zweiten Position die Kontur des 1950 mm breiten Stromabnehmers nach EN 50367.

In einer vorteilhaften Weiterbildung wird der Antrieb der drehbaren Schleifleisten-Verlängerungen mit Hilfe von Druckluftzylindern bewerkstelligt, die durch elektrisch nichtleitende Schläuche vom Schienenfahrzeug mit Druckluft versorgt werden.

Bezüglich der Zylinder sind verschiedene Ausführungsformen möglich:
Jede Schleifleisten-Verlängerung wird direkt von einem eigenem Druckluftzylinder angetrieben. Die Zylinder bilden dann eine schräge Verbindung zwischen den Schleifleisten-Verlängerungen und dem Träger.

Alternativ dazu werden jeweils zwei auf der gleichen Seite liegende Schleifleisten-Verlängerungen über Koppelstangen von nur einem Druckluftzylinder angetrieben. Dies resultiert in zwei Zylindern, die in der Mitte des Trägers und parallel zu den Schleifleisten angeordnet sind.

Die Zylinder können übereinander angeordnet sein oder, wenn es die Platzverhältnisse zulassen, auch nebeneinander und in einer Linie angeordnet sein.

Die vorliegende Erfindung realisiert einen Universal-Stromabnehmer, der beim grenzüberschreitenden Verkehr in mehreren Stromnetzen einsetzbar ist.

Die vorliegende Erfindung ermöglicht es, die Anzahl bislang benötigter Stromabnehmer auf dem Dach des Schienenfahrzeugs zu verringern.

Die vorliegende Erfindung erweitert das Einsatzgebiet bei gleichbleibender Stromabnehmer-Anzahl und erreicht eine Stromabnehmer-Redundanz auf Mehrsystem-Schienenfahrzeugen.

Bei der vorliegenden Erfindung kann mit Blick auf den eingangs geschilderten Stand der Technik der beiden Druckschriften EP 2 497 674 A2 bzw. DE 10 2011 013 267 A1 die Anzahl der benötigten Druckluftzylinder reduziert werden: bei der vorliegenden Erfindung werden wie vorstehend beschrieben im optimalsten Fall lediglich zwei Druckluftzylinder anstelle von dort vier verwendeten Druckluftzylindern benötigt.

Dies hat sowohl eine Reduktion des Gewichts des Stromabnehmers als auch eine Steigerung der Zuverlässigkeit der gesamten technischen Konstruktion zur Folge.

Nachfolgend wird die vorliegende Erfindung beispielhaft anhand einer Zeichnung näher erläutert. Dabei zeigt:
- FIG 1: in einer Draufsicht eine erste Ausgestaltung des erfindungsgemäßen Stromabnehmers in einer eingeklappten Stellung,
- FIG 2: mit Bezug auf FIG 1 den erfindungsgemäßen Stromabnehmer in einer ausgeklappten Stellung,
- FIG 3: in einer Draufsicht eine zweite Ausgestaltung des erfindungsgemäßen Stromabnehmers in einer fast eingeklappten Stellung, und
- FIG 4: mit Bezug auf FIG 3 den erfindungsgemäßen Stromabnehmer in einer ausgeklappten Stellung.

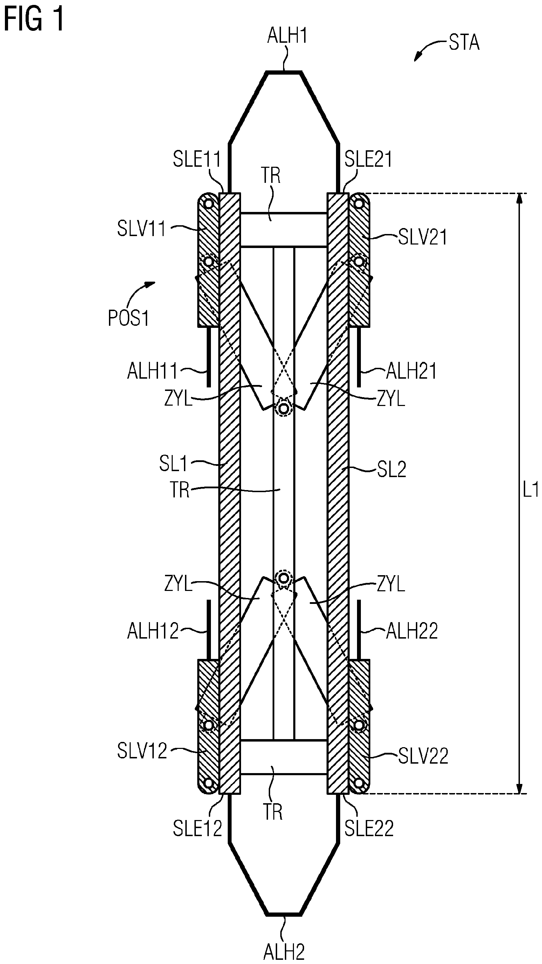

FIG 1 zeigt in einer Draufsicht eine erste Ausgestaltung des erfindungsgemäßen Stromabnehmers in einer eingeklappten Stellung.

Ein Träger TR weist zwei Schleifleisten SL1, SL2 auf. Die beiden Schleifleisten SL1, SL2 weisen eine erste Länge L1 auf und haben zueinander einen vorbestimmten Abstand. Die beiden Schleifleisten SL1, SL2 sind im Wesentlichen parallel zueinander auf dem Träger TR befestigt.

Der Träger TR ist wiederum derart ausgebildet, dass er auf dem Dach des Schienenfahrzeugs die beiden Schleifleisten SL1, SL2 quer zur Fahrtrichtung des Schienenfahrzeugs ausrichtet und diese in elektrisch leitendem Kontakt zu einem Fahrdraht bringt, der längs der Fahrtrichtung des Schienenfahrzeugs angeordnet ist.

Eine erste Schleifleiste SL1 weist an ihren beiden Enden SLE11, SLE12 jeweils eine Schleifleisten-Verlängerung SLV11, SLV12 auf.

Eine zweite Schleifleiste SL2 weist an ihren beiden Enden SLE21, SLE22 jeweils eine Schleifleisten-Verlängerung SLV21, SLV22 auf.

Diese Schleifleisten-Verlängerungen SLV11, SLV12, SLV21, SLV22 sind drehbar gelagert mit dem jeweils zugeordneten Ende SLE11, SLE12, SLE21, SLE22 der Schleifleisten SL1, SL2 verbunden.

In der hier gezeigten ersten Position POS1 sind die Schleifleisten-Verlängerungen SLV11, SLV12, SLV21, SLV22 derart parallel zu den Schleifleisten SL1, SL2 angeordnet, dass eine resultierende Gesamtlänge der Schleifleisten SL1, SL2 mit den zugehörigen Schleifleisten-Verlängerungen SLV11, SLV12, SLV21, SLV22 der ersten Länge L1 der Schleifleisten SL1, SL2 entspricht - d.h. in der ersten Position POS1 sind hier die Schleifleisten-Verlängerungen SLV11, SLV12, SLV21, SLV22 eingeklappt.

Jede Schleifleisten-Verlängerung SLV11, SLV12, SLV21, SLV22 weist an einem Ende jeweils ein Auflaufhorn ALH11, ALH12, ALH21, ALH22 oder eine entsprechend gestaltete Restkontur auf.

Die Schleifleisten-Verlängerungen SLV11, SLV12, SLV21, SLV22 sind in diesem Beispiel bezogen auf den Stromabnehmer STA außen an den beiden Schleifleisten SL1, SL2 drehbar befestigt.

Die Schleifleisten-Verlängerungen SLV11, SLV12, SLV21, SLV22 werden hier über vier Zylinder ZYL in ihrer Position durch Drehung verändert.

Dazu ist jeder Zylinder ZYL an einer ersten Seite mit dem Träger TR und an einer zweiten Seite mit einer der zugehörigen Schleifleisten-Verlängerungen SLV11, SLV12, SLV21, SLV22 verbunden.

Bevorzugt sind die Schleifleisten SL1, SL2 sowie deren Schleifleisten-Verlängerungen SLV11, SLV12, SLV21, SLV22 in der ersten Position POS1 und in der nachfolgend beschriebenen zweiten Position POS2 derart angeordnet, dass die zugehörigen leitenden Schichten bzw. Graphitschichten (hier schraffiert dargestellt) in einer gemeinsamen Ebene angeordnet sind, um die Leistungsabnahme vom Fahrdraht störungsfrei zu gewährleisten.

Bei dem hier dargestellten Beispiel sind die beiden Schleifleisten SL1, SL2 an ihren jeweiligen Enden SLE11, SLE12, SLE21, SLE22 miteinander verbunden, so dass die Verbindungen die Funktionalität eines Auflaufhorns ALH1, ALH2 realisieren.

Die Zylinder ZYL sind hier in eingefahrenem Zustand gezeigt, wobei für jede Schleifleisten-Verlängerung SLV11, SLV12, SLV21, SLV22 jeweils ein Zylinder für die Drehung vorgesehen ist.

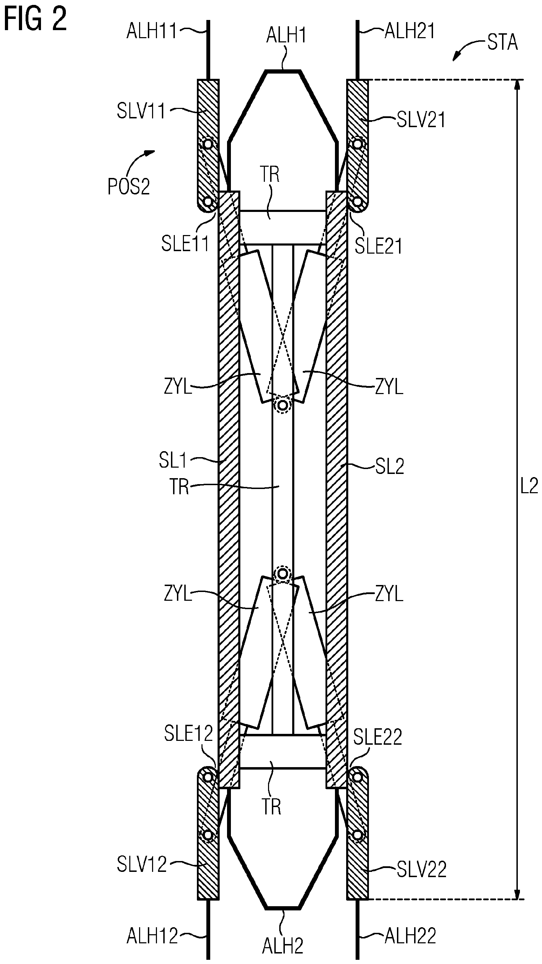

FIG 2 zeigt mit Bezug auf FIG 1 den erfindungsgemäßen Stromabnehmer in einer ausgeklappten Stellung.

In der hier gezeigten zweiten Position POS2 sind die Schleifleisten-Verlängerungen SLV11, SLV12, SLV21, SLV22 derart parallel zu den jeweiligen Schleifleisten SL1, SL2 angeordnet, dass die resultierende Gesamtlänge der Schleifleisten SL1, SL2 mit den zugehörigen Schleifleisten-Verlängerungen SLV11, SLV12, SLV21, SLV22 einer zweiten Länge L2 entspricht, die größer als die erste Länge L1 ist.

Mit anderen Worten sind hier die Schleifleisten-Verlängerungen SLV11, SLV12, SLV21, SLV22 ausgeklappt und verlängern die beiden Schleifleisten SL1, SL2 entsprechend von der ersten Länge L1 zur zweiten (Gesamt-)Länge L2.

Jede Schleifleisten-Verlängerung SLV11, SLV12, SLV21, SLV22 weist an einem Ende ein Auflaufhorn ALH11, ALH12, ALH21, ALH22 oder eine entsprechend gestaltete Restkontur auf, so dass in der zweiten Position POS2 der Schleifleisten-Verlängerung SLV11, SLV12, SLV21, SLV22 die Funktionalität eines Auflaufhorns für die verlängerte Schleifleiste sichergestellt ist.

Die Zylinder ZYL sind hier in ausgefahrenem Zustand gezeigt.

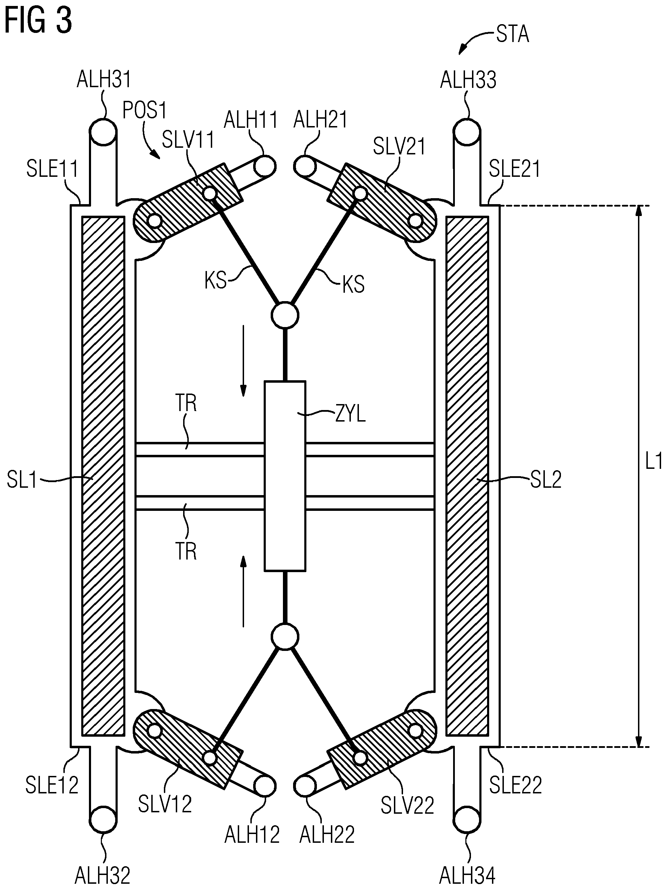

FIG 3 zeigt in einer Draufsicht eine zweite Ausgestaltung des erfindungsgemäßen Stromabnehmers in einer fast eingeklappten Stellung.

Die Schleifleisten-Verlängerungen SLV11, SLV12, SLV21, SLV22 sind in diesem Beispiel bezogen auf den Stromabnehmer STA innen an den beiden Schleifleisten SL1, SL2 drehbar befestigt.

Ein Träger TR weist zwei Schleifleisten SL1, SL2 auf. Die beiden Schleifleisten SL1, SL2 weisen eine erste Länge L1 auf und haben zueinander einen vorbestimmten Abstand. Die beiden Schleifleisten SL1, SL2 sind im Wesentlichen parallel zueinander auf dem Träger TR befestigt.

Der Träger TR ist wiederum derart ausgebildet, dass er auf dem Dach des Schienenfahrzeugs die beiden Schleifleisten SL1, SL2 quer zur Fahrtrichtung des Schienenfahrzeugs ausrichtet und diese in elektrisch leitendem Kontakt zu einem Fahrdraht bringt. Der Fahrdraht ist längs der Fahrtrichtung des Schienenfahrzeugs angeordnet.

Eine erste Schleifleiste SL1 weist an ihren beiden Enden SLE11, SLE12 jeweils eine Schleifleisten-Verlängerung SLV11, SLV12 auf.

Eine zweite Schleifleiste SL2 weist an ihren beiden Enden SLE21, SLE22 jeweils eine Schleifleisten-Verlängerung SLV21, SLV22 auf.

Diese Schleifleisten-Verlängerungen SLV11, SLV12, SLV21, SLV22 sind drehbar gelagert mit dem jeweils zugeordneten Ende SLE11, SLE12, SLE21, SLE22 der Schleifleisten SL1, SL2 verbunden.

In der hier gezeigten ersten Position POS1 sind die Schleifleisten-Verlängerungen SLV11, SLV12, SLV21, SLV22 derart zu den Schleifleisten SL1, SL2 angeordnet, dass eine resultierende Gesamtlänge der Schleifleisten SL1, SL2 mit den zugehörigen Schleifleisten-Verlängerungen SLV11, SLV12, SLV21, SLV22 der ersten Länge L1 der Schleifleisten SL1, SL2 entspricht.

Jede Schleifleisten-Verlängerung SLV11, SLV12, SLV21, SLV22 weist an einem Ende jeweils ein Auflaufhorn ALH11, ALH12, ALH21, ALH22 oder eine entsprechend gestaltete Restkontur auf.

Die Schleifleisten-Verlängerungen SLV11, SLV12, SLV21, SLV22 werden hier über nur zwei Zylinder ZYL in ihrer Position durch Drehung verändert.

Dazu ist jeder Zylinder ZYL an einer ersten Seite mit dem Träger TR und an einer zweiten Seite über Koppelstangen KS mit der jeweils zugehörigen Schleifleisten-Verlängerung SLV11, SLV12 bzw. SLV21, SLV22 verbunden.

Die Zylinder ZYL sind hier in einem fast eingefahrenen Zustand gezeigt.

Bevorzugt sind die Schleifleisten SL1, SL2 sowie deren Schleifleisten-Verlängerungen SLV11, SLV12, SLV21, SLV22 in der ersten Position POS1 und in der nachfolgend beschriebenen zweiten Position POS2 derart angeordnet, dass die zugehörigen leitenden Schichten bzw. Graphitschichten (hier schraffiert dargestellt) in einer gemeinsamen Ebene angeordnet sind, um die Leistungsabnahme vom Fahrdraht störungsfrei zu gewährleisten.

Bei dem hier dargestellten Beispiel sind die beiden Schleifleisten SL1, SL2 an ihren jeweiligen Enden SLE11, SLE12, SLE21, SLE22) nicht miteinander verbunden, sondern weisen jeweilige Auflaufhörner ALH31, ALH32, ALH33, ALH34 oder eine entsprechend gestaltete Restkontur auf.

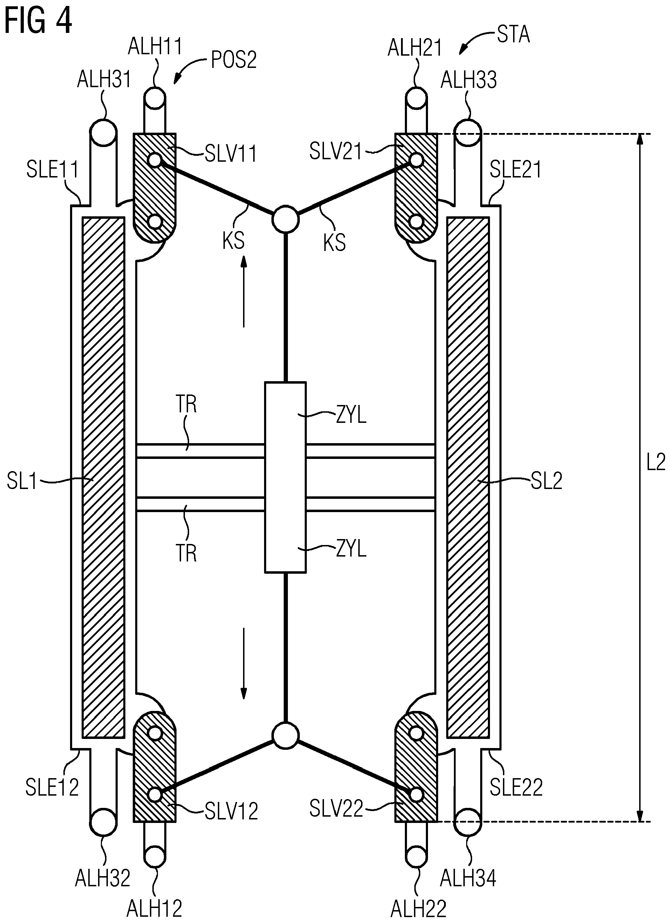

FIG 4 zeigt mit Bezug auf FIG 3 den erfindungsgemäßen Stromabnehmer in einer ausgeklappten Stellung.

In der hier gezeigten zweiten Position POS2 sind die Schleifleisten-Verlängerungen SLV11, SLV12, SLV21, SLV22 derart parallel zu den jeweiligen Schleifleisten SL1, SL2 angeordnet, dass die resultierende Gesamtlänge der Schleifleisten SL1, SL2 mit den zugehörigen Schleifleisten-Verlängerungen SLV11, SLV12, SLV21, SLV22 einer zweiten Länge L2 entspricht, die größer als die erste Länge L1 ist.

Mit anderen Worten sind hier die Schleifleisten-Verlängerungen SLV11, SLV12, SLV21, SLV22 ausgeklappt und verlängern die beiden Schleifleisten SL1, SL2 entsprechend von der ersten Länge L1 zur zweiten (Gesamt-)Länge L2.

Jede Schleifleisten-Verlängerung SLV11, SLV12, SLV21, SLV22 weist an einem Ende ein Auflaufhorn ALH11, ALH12, ALH21, ALH22 oder eine entsprechend gestaltete Restkontur auf, so dass in der zweiten Position POS2 der Schleifleisten-Verlängerung SLV11, SLV12, SLV21, SLV22 die Funktionalität eines Auflaufhorns für die verlängerte Schleifleiste sichergestellt ist.

Die beiden Zylinder ZYL sind hier in ausgefahrenem Zustand gezeigt, wobei für je zwei Schleifleisten-Verlängerungen SLV11, SLV12, SLV21, SLV22 jeweils ein Zylinder ZYL für die Drehung vorgesehen ist.

## Patentansprüche

1. Stromabnehmer (STA) für ein Schienenfahrzeug, das für einen grenzüberschreitenden Verkehr vorgesehen ist,
- mit einem Träger (TR) und mit zwei Schleifleisten (SL1, SL2), die eine erste Länge (L1) aufweisen,
- bei dem der Träger (TR) derart ausgebildet ist, dass er auf dem Dach des Schienenfahrzeugs die beiden Schleifleisten (SL1, SL2) quer zur Fahrtrichtung des Schienenfahrzeugs ausrichtet und diese in elektrisch leitendem Kontakt zu einem Fahrdraht bringt,
- bei dem jede Schleifleiste (SL1, SL2) an jedem Ende (SLE11, SLE12, SLE21, SLE22) jeweils eine Schleifleisten-Verlängerung (SLV11, SLV12, SLV21, SLV22) aufweist,
- bei dem die jeweilige Schleifleisten-Verlängerung (SLV11, SLV12, SLV21, SLV22) um eine vertikale Achse drehbar gelagert mit dem jeweiligen Ende (SLE11, SLE12, SLE21, SLE22) der Schleifleiste (SL1, SL2) verbunden ist,
- bei dem in einer ersten Position (POS1) die Schleifleisten-Verlängerungen (SLV11, SLV12, SLV21, SLV22) derart zur Schleifleiste (SL1, SL2) durch Drehung um die vertikale Achse angeordnet sind, dass eine resultierende Gesamtlänge der Schleifleiste (SL1, SL2) mit den zugehörigen Schleifleisten-Verlängerungen (SLV11, SLV12, SLV21, SLV22) der ersten Länge (L1) der Schleifleiste (SL1, SL2) entspricht, und
- bei dem in einer zweiten Position (POS2) die Schleifleisten-Verlängerungen (SLV11, SLV12, SLV21, SLV22) durch Drehung um die vertikale Achse derart zur Schleifleiste (SL1, SL2) angeordnet sind, dass die resultierende Gesamtlänge der Schleifleiste (SL1, SL2) mit den zugehörigen Schleifleisten-Verlängerungen (SLV11, SLV12, SLV21, SLV22) einer zweiten Länge (L2) entspricht, die größer ist als die erste Länge (L1).

2. Stromabnehmer (STA) nach Anspruch 1, bei dem jede Schleifleisten-Verlängerung (SLV11, SLV12, SLV21, SLV22) an einem Ende ein Auflaufhorn (ALH11, ALH12, ALH21, ALH22) aufweist, so dass in der zweiten Position (POS2) der Schleifleisten-Verlängerungen (SLV11, SLV12, SLV21, SLV22) die Funktionalität eines Auflaufhorns für die verlängerte Schleifleiste sichergestellt ist.

3. Stromabnehmer (STA) nach Anspruch 1 oder 2, bei dem die Schleifleisten-Verlängerungen (SLV11, SLV12, SLV21, SLV22) über jeweilige Zylinder (ZYL), die bevorzugt als Hydraulik-Zylinder oder als Druckluft-Zylinder ausgebildet sind, drehbar sind, wobei jeder Zylinder (ZYL) an einer ersten Seite mit dem Träger (TR) und an einer zweiten Seite mit einer zugehörigen Schleifleisten-Verlängerung (SLV11, SLV12, SLV21, SLV22) verbunden ist.

4. Stromabnehmer (STA) nach einem der vorhergehenden Ansprüche, bei dem die beiden Schleifleisten (SL1, SL2) in einem vorbestimmten Abstand im Wesentlichen parallel zueinander auf dem Träger (TR) befestigt sind.

5. Stromabnehmer (STA) nach einem der vorhergehenden Ansprüche, bei dem der Träger (TR) derart ausgebildet ist, dass er auf dem Dach des Schienenfahrzeugs die beiden Schleifleisten (SL1, SL2) quer zur Fahrtrichtung des Schienenfahrzeugs ausrichtet und diese in elektrisch leitendem Kontakt zum Fahrdraht bringt, der längs der Fahrtrichtung des Schienenfahrzeugs angeordnet ist, um eine Stromaufnahme vom Fahrdraht zu den Schleifleisten (SL1, SL2) zu realisieren.

6. Stromabnehmer (STA) nach einem der vorhergehenden Ansprüche, bei dem die Schleifleisten (SL1, SL2) sowie deren Schleifleisten-Verlängerungen (SLV11, SLV12, SLV21, SLV22) in der ersten Position (POS1) und in der zweiten Position (POS2) derart angeordnet sind, dass leitende Schichten bzw. Grafitschichten, die den Schleifleisten (SL1, SL2) sowie deren Schleifleisten-Verlängerungen (SLV11, SLV12, SLV21, SLV22) zugeordnet sind, in einer gemeinsamen Ebene angeordnet sind, um die Leistungsabnahme vom Fahrdraht störungsfrei zu gewährleisten.

7. Stromabnehmer (STA) nach einem der vorhergehenden Ansprüche, bei dem die beiden Schleifleisten (SL1, SL2) der ersten Länge (L1) an ihren jeweiligen Enden (SLE11, SLE12, SLE21, SLE22) miteinander verbunden sind, so dass die jeweilige Verbindung die Funktionalität eines Auflaufhorns (ALH1, ALH2) realisiert.

8. Stromabnehmer (STA) nach einem der vorhergehenden Ansprüche,
- bei dem in der ersten Position (POS1) die Schleifleisten-Verlängerungen (SLV11, SLV12, SLV21, SLV22) derart parallel zur Schleifleiste (SL1, SL2) angeordnet sind, dass eine resultierende Gesamtlänge der Schleifleiste (SL1, SL2) mit den zugehörigen Schleifleisten-Verlängerungen (SLV11, SLV12, SLV21, SLV22) der ersten Länge (L1) der Schleifleiste (SL1, SL2) entspricht, und
- bei dem in der zweiten Position (POS2) die Schleifleisten-Verlängerungen (SLV11, SLV12, SLV21, SLV22) derart parallel zur Schleifleiste (SL1, SL2) angeordnet sind, dass die resultierende Gesamtlänge der Schleifleiste (SL1, SL2) mit den zugehörigen Schleifleisten-Verlängerungen (SLV11, SLV12, SLV21, SLV22) einer zweiten Länge (L2) entspricht, die größer ist als die erste Länge (L1).

## Claims

1. Current collector (STA) for a rail vehicle which is intended for cross-border transport,
- having a support (TR) and having two contact strips (SL1, SL2) which have a first length (L1),
- in which the support (TR) is designed in such a way that, on the roof of the rail vehicle, it orients the two contact strips (SL1, SL2) transversely with respect to the direction of travel of the rail vehicle and brings them into electrically conductive contact with a contact wire,
- in which each contact strip (SL1, SL2) has a respective contact strip extension (SLV11, SLV12, SLV21, SLV22) at each end (SLE11, SLE12, SLE21, SLE22),
- in which the respective contact strip extension (SLV11, SLV12, SLV21, SLV22) is connected to the respective end (SLE11, SLE12, SLE21, SLE22) of the contact strip (SL1, SL2) in a manner mounted rotatably about a vertical axis,
- in which, in a first position (POS1), the contact strip extensions (SLV11, SLV12, SLV21, SLV22) are arranged with respect to the contact strip (SL1, SL2) by rotation about the vertical axis in such a way that a resulting total length of the contact strip (SL1, SL2) with the associated contact strip extensions (SLV11, SLV12, SLV21, SLV22) corresponds to the first length (L1) of the contact strip (SL1, SL2), and
- in which, in a second position (POS2), the contact strip extensions (SLV11, SLV12, SLV21, SLV22) are arranged with respect to the contact strip (SL1, SL2) by rotation about the vertical axis in such a way that the resulting total length of the contact strip (SL1, SL2) with the associated contact strip extensions (SLV11, SLV12, SLV21, SLV22) corresponds to a second length (L2), which is greater than the first length (L1).

2. Current collector (STA) according to Claim 1, in which each contact strip extension (SLV11, SLV12, SLV21, SLV22) has a horn (ALH11, ALH12, ALH21, ALH22) at one end, so that, in the second position (POS2) of the contact strip extensions (SLV11, SLV12, SLV21, SLV22), the functionality of a horn is ensured for the extended contact strip.

3. Current collector (STA) according to Claim 1 or 2, in which the contact strip extensions (SLV11, SLV12, SLV21, SLV22) are rotatable by means of respective cylinders (ZYL), which are preferably designed as hydraulic cylinders or as compressed-air cylinders, wherein each cylinder (ZYL) is connected to the support (TR) on a first side and to an associated contact strip extension (SLV11, SLV12, SLV21, SLV22) on a second side.

4. Current collector (STA) according to one of the preceding claims, in which the two contact strips (SL1, SL2) are mounted on the support (TR) substantially parallel to one another at a predetermined distance.

5. Current collector (STA) according to one of the preceding claims, in which the support (TR) is designed in such a way that, on the roof of the rail vehicle, it orients the two contact strips (SL1, SL2) transversely with respect to the direction of travel of the rail vehicle and brings them into electrically conductive contact with the contact wire which is arranged along the direction of travel of the rail vehicle, in order to implement current draw from the contact wire to the contact strips (SL1, SL2).

6. Current collector (STA) according to one of the preceding claims, in which the contact strips (SL1, SL2) and their contact strip extensions (SLV11, SLV12, SLV21, SLV22) are arranged in the first position (POS1) and in the second position (POS2) in such a way that conductive layers or graphite layers which are associated with the contact strips (SL1, SL2) and their contact strip extensions (SLV11, SLV12, SLV21, SLV22) are arranged in a common plane in order to ensure the power draw from the contact wire without problems.

7. Current collector (STA) according to one of the preceding claims, in which the two contact strips (SL1, SL2) of the first length (L1) are connected to one another at their respective ends (SLE11, SLE12, SLE21, SLE22), so that the respective connection implements the functionality of a horn (ALH1, ALH2).

8. Current collector (STA) according to one of the preceding claims,
- in which, in the first position (POS1), the contact strip extensions (SLV11, SLV12, SLV21, SLV22) are arranged parallel with respect to the contact strip (SL1, SL2) in such a way that a resulting total length of the contact strip (SL1, SL2) with the associated contact strip extensions (SLV11, SLV12, SLV21, SLV22) corresponds to the first length (L1) of the contact strip (SL1, SL2),
and
- in which, in the second position (POS2), the contact strip extensions (SLV11, SLV12, SLV21, SLV22) are arranged parallel with respect to the contact strip (SL1, SL2) in such a way that the resulting total length of the contact strip (SL1, SL2) with the associated contact strip extensions (SLV11, SLV12, SLV21, SLV22) corresponds to a second length (L2), which is greater than the first length (L1).

## Revendications

1. Pantographe (STA) pour un véhicule ferroviaire, qui est prévu pour un trafic transfrontalier,
- avec un support (TR) et avec deux barres de contact (SL1, SL2) qui présentent une première longueur (L1),
- dans lequel le support (TR) est conçu de façon à ce qu'il oriente, sur le toit du véhicule ferroviaire, les deux barres de contact (SL1, SL2) transversalement par rapport à la direction de déplacement du véhicule ferroviaire et les met en contact électriquement conducteur avec un fil de contact,
- dans lequel chaque barre de contact (SL1, SL2) comprend, à chaque extrémité (SLE11, SLE12, SLE21, SLE22), respectivement un prolongement de barre de contact (SLV11, SLV12, SLV21, SLV22),
- dans lequel chaque prolongement de barre de contact (SLV11, SLV12, SLV21, SLV22) est logé de manière rotative autour d'un axe vertical et est relié avec l'extrémité (SLE11, SLE12, SLE21, SLE22) respective de la barre de contact (SL1, SL2),
- dans lequel, dans une première position (POS1), les prolongements de barres de contact (SLV11, SLV12, SLV21, SLV22) sont disposés par rapport à la barre de contact (SL1, SL2) par une rotation autour de l'axe vertical, de façon à ce qu'une longueur totale résultante de la barre de contact (SL1, SL2), avec les prolongements de barres de contact (SLV11, SLV12, SLV21, SLV22) correspondants, corresponde à la première longueur (L1) de la barre de contact (SL1, SL2) et
- dans lequel, dans une deuxième position (POS2), les prolongements de barres de contact (SLV11, SLV12, SLV21, SLV22) sont disposés par rapport à la barre de contact (SL1, SL2) par une rotation autour de l'axe vertical, de façon à ce qu'une longueur totale résultante de la barre de contact (SL1, SL2), avec les prolongements de barres de contact (SLV11, SLV12, SLV21, SLV22) correspondants, corresponde à une deuxième longueur (L2), qui est supérieure à la première longueur (L1).

2. Pantographe (STA) selon la revendication 1, dans lequel chaque prolongement de barre de contact (SLV11, SLV12, SLV21, SLV22) comprend, sur une extrémité, une corne de pantographe (ALH11, ALH12, ALH21, ALH22), de façon à ce que, dans la deuxième position (POS2) des prolongements de barres de contact (SLV11, SLV12, SLV21, SLV22), la fonctionnalité d'une corne de pantographe pour la barre de contact prolongée soit assurée.

3. Pantographe (STA) selon la revendication 1 ou 2, dans lequel les prolongements de barres de contact (SLV11, SLV12, SLV21, SLV22) peuvent tourner grâce à des cylindres (ZYL) respectifs, qui sont conçus de préférence comme des cylindres hydrauliques ou des cylindres à air comprimé, dans lequel chaque cylindre (ZYL) est relié, au niveau d'un premier côté, avec le support (TR) et, au niveau d'un deuxième côté, avec un prolongement de barre de contact (SLV11, SLV12, SLV21, SLV22) correspondant.

4. Pantographe (STA) selon l'une des revendications précédentes, dans lequel les deux barres de contact (SL1, SL2) sont fixées à une distance prédéterminée de manière essentiellement parallèle entre elles sur le support (TR).

5. Pantographe (STA) selon l'une des revendications précédentes, dans lequel le support (TR) est conçu de façon à orienter, sur le toit du véhicule ferroviaire, les deux barres de contact (SL1, SL2) transversalement par rapport à la direction de déplacement du véhicule ferroviaire et les met en contact électriquement conducteur avec le fil de contact qui est disposé le long de la direction de déplacement du véhicule ferroviaire, afin de réaliser une prise de courant du fil de contact vers les barres de contact (SL1, SL2).

6. Pantographe (STA) selon l'une des revendications précédentes, dans lequel les barres de contact (SL1, SL2) ainsi que leurs prolongements de barres de contact (SLV11, SLV12, SLV21, SLV22) sont disposés, dans la première position (POS1) et dans la deuxième position (POS2) de façon à ce que des couches conductrices resp. des couches de graphite, qui sont associées aux barres de contact (SL1, SL2) ainsi qu'à leurs prolongements de barres de contact (SLV11, SLV12, SLV21, SLV22), soient disposées sur un plan commun afin d'assurer une prise de courant sans perturbation à partir du fil de contact.

7. Pantographe (STA) selon l'une des revendications précédentes, dans lequel les deux barres de contact (SL1, SL2) d'une première longueur (L1) sont reliées entre elles au niveau de leurs extrémités (SLE11, SLE12, SLE21, SLE22) respectives, de façon à ce que la liaison correspondante réalise la fonctionnalité d'une corne de pantographe (ALH1, ALH2).

8. Pantographe (STA) selon l'une des revendications précédentes,
- dans lequel, dans la première position (POS1), les prolongements de barres de contact (SLV11, SLV12, SLV21, SLV22) sont disposés parallèlement à la barre de contact (SL1, SL2) de façon à ce qu'une longueur totale résultante de la barre de contact (SL1, SL2) avec les prolongements de barres de contact (SLV11, SLV12, SLV21, SLV22) correspondants, corresponde à la première longueur (L1) de la barre de contact (SL1, SL2) et
- dans lequel, dans la deuxième position (POS2), les prolongements de barres de contact (SLV11, SLV12, SLV21, SLV22) sont disposés parallèlement à la barre de contact (SL1, SL2) de façon à ce que la longueur totale résultante de la barre de contact (SL1, SL2) avec les prolongements de barres de contact (SLV11, SLV12, SLV21, SLV22) correspondants, corresponde à une deuxième longueur (L2), qui est supérieure à la première longueur (L1).
